# EUROPEAN PATENT APPLICATION

(11) **EP 4 717 997 A1**
(43) Date of publication of application: **01.04.2026**
(21) Application number: 25204574.5
(22) Date of filing: 25.09.2025
(51) Int. Cl.: F24S 50/20, H02S 20/32, F24S 30/428

(54) **SOLAR TRACKER**

(30) Priority: 25.09.2024 NL 2038711
(71) Applicant: Lost Tostie B.V., 3111 NT Schiedam (NL)
(72) Inventor: NIJMAN, Taco, 3111 NT Schiedam (NL); VAN ROSSUM, Cindy Louise, 3111 NT Schiedam (NL)
(74) Representative: EP&C

(57) **Abstract**

Solar tracker (1) for stand-alone power supply, comprising a support frame; a main solar module (3) to convert incident light into heat or electric power, having a main receiving surface rotatably mounted to the support frame around a rotation axis; an actuator (4) to move the main solar module with respect to the support frame around the rotation axis between a sunrise and a sunset position; a control arrangement to control the actuator, comprising a tracking solar module (5) electrically connected to the actuator to convert incident light into electric power for powering the actuator, wherein the tracking solar module is coupled to the main solar module to rotate therewith, wherein the tracking solar module is positioned with respect to the main receiving surface to receive incident light and activated the actuator to rotate the main receiving surface towards the sun, wherein the control arrangement comprises a return solar module (6) electrically connected to the actuator to convert incident light into electric power for powering the actuator, wherein the return solar module is positioned such that, when the main receiving surface is arranged in the sunset position, the return solar module is uncovered for receiving incident light and the actuator can be activated by the return solar module to rotate the main receiving surface into the sunrise position; when the main receiving surface is in the sunrise position, the return solar module is covered to block incident light, such that the actuator cannot be activated by the return solar module.

## Description

### Field of the invention

The present invention relates to a solar tracker for stand-alone power supply, to a modular power generation device comprising the solar tracker, and to the use of a modular power generation device.

### Background of the invention

By maintaining a solar panel at an angle relative to the sun, the solar energy received by the panel during a day can be increased compared to a stationary solar panel. Especially in applications wherein a relatively low solar panel surface is available, e.g. mobile applications, a solar panel moving along with the sun may be very advantageous to increase power generation without increasing size and weight.

However, it has been found that the present solar tracking devices have limited usability in practice. Tracking the sun usually requires a relatively large number of moving parts which increase weight, reduce lifespan, increase maintenance requirements and/or of electronics that are relatively complex, error-prone and/or vulnerable. The electronics need power and thereby reduce the efficiency of the device. Further, a timer, programmed chip, software and/or battery is often required. Repairability or replacement of such parts, especially in remote locations, poses additional challenges.

As an example, solar trackers having light sensors for tracking the sun are known. However, such sensors are resistive elements that do not produce any power by themselves, such that an external power supply, e.g. a battery, is required to power tracking motors, whereas external power is regularly unavailable on locations where a solar panel is used and batteries can run empty, have a limited and decreasing capacity, and pose environmental requirements, e.g. with respect to minimum and maximum temperature. Further, sensors for tracking the sun have a relatively small surface and are therefore susceptible to false tracking when the sun is obscured by clouds. Further, devices are known that have a high power consumption when turned on, e.g. as the sensors need to be moved around to find the sun.

US2015040964A1 discloses a self-powered light seeking apparatus for directing a target plane to a light source, comprising a photovoltaic powering arrangement having multiple photovoltaic panels arranged under an angle and rotating with the target plane. The photovoltaic panels are wired to an actuator such that the polarity of the driving current causes the actuator to drive the target-plane towards alignment with the sun.

It has been found that the known device has a limited tracking capability, as the angle of the photovoltaic panel on the shaft is limited by the requirement that morning rays arriving from the east are unobstructed such that they are incident on the east facing solar panel.

In particular, it has been found that if the target plane would rotate too far westward, no morning rays would be incident on the east facing solar panel, and the target plane would not rotate at all.

Further, it has been found that known devices are relatively heavy, cannot be disassembled easily and, combined with the disadvantages mentioned before, are therefore limitedly suitable for mobile usage, e.g. for use in remote areas, for campers, for military use or in humanitarian aid after disasters or in crises.

US8895834B1 discloses an assembly for adjusting the position of a solar array to enable it to maintain a desired solar energy reception throughout operation. A first axle is provided with a first motor for providing azimuth angle adjustment, and a second axle is provided with a second motor for providing elevation angle adjustment. The motors are electrically connected to and powered by their respective solar panels. Divider circuits control the current fed into the motors to control the rotational movement.

### Object of the invention

It is therefore an object of the present invention to provide a solar tracker for stand-alone power supply that at least partially overcomes the disadvantages of the prior art, or at least to provide an alternative solar tracker, for example a solar tracker that has a relatively high power efficiency, that is suitable for stand-alone use, does not rely on external power, has a relatively low number of movable parts or complex electronics, a solar tracker that is relatively easy to repair and replace, has a high durability and reliability and/or a solar tracker that is advantegously suitable for stand-alone use in mobile applications.

### Description of the invention

The invention provides a solar tracker for stand-alone power supply according to claim 1. The solar tracker comprises a support frame for supporting the solar tracker on a ground surface; a main solar module to convert incident light into heat for heating an object and/or into electric power for power supply to external devices, e.g. energy storage, such as a battery, having a main receiving surface rotatably mounted to the support frame around a rotation axis; an actuator, e.g. an electric motor, to move the main solar module with respect to the support frame around the rotation axis between a sunrise position and a sunset position; and a control arrangement to control the actuator, comprising a tracking solar module electrically connected to the actuator to convert incident light into electric power for powering the actuator.

The main solar module may comprise a heating module, such as a sun oven or sun furnace, e.g. for preparing food, and/or a water heater for heating a water reservoir, such as a swimming pool or heating system. A heating connector may be provided to connect the main solar module to an external heat sink, e.g. to the water reservoir. The main solar module may comprise a photovoltaic panel. A power connector may be provided to electrically connect the main solar module to an external device.

The tracking solar module is coupled to the main solar module to rotate therewith, and the tracking solar module is positioned with respect to the main receiving surface such that, when the main receiving surface is faced away from the sun, the tracking solar module receives incident light and the actuator can be powered by the tracking solar module to rotate the main receiving surface towards the sun, and when the main receiving surface is faced towards the sun, the tracking solar module generates insufficient power and the actuator cannot be activated thereby.

The control arrangement further comprises a return solar module electrically connected to the actuator to convert incident light into electric power for powering the actuator. The return solar module is positioned with respect to the main receiving surface such that, when the main receiving surface is arranged in the sunset position, the return solar module is uncovered for receiving incident light and the actuator can be activated by the return solar module to rotate the main receiving surface into the sunrise position, and when the main receiving surface is in the sunrise position, the return solar module is covered to block incident light, such that the actuator cannot be activated by the return solar module.

The solar tracker according to the invention is, in addition to the tracking solar module, provided with a return solar module also connected to the actuator, and positioned with respect to the support frame such that return solar module is covered when the main receiving panel is in the sunrise position. The return solar module may be positioned such that it is at least partially covered when the main solar module is located between the sunrise and the sunset positions. As such, during use of the main solar module, the return solar module will not rotate the main solar module back to the sunrise position, but allows the tracking solar module to activate the actuator to track the sun.

After sunset, the main solar module will be arranged towards or in the sunset position, and the return solar module is uncovered, such that, at sunrise, the return solar module will activate the actuator and the main solar module is rotated towards the sunrise position.

Upon reaching the sunrise position, the return solar module is covered and the tracking starts again, whereby the tracking solar module causes the main solar module to rotate with the sun, and subsequent morning rotation into the sunrise position is repeated again. This way, stand-alone return of the main solar module may in principle be achieved. This provides several advantages:
Firstly, power for the rotation between the sunset position and the sunrise position can be delivered by the return solar module, such that rotation may be performed without the need for an external power source, battery or accumulator. As such, rotation is relatively reliable.

Secondly, the complexity of the solar tracker in terms of number of moving parts and electronics is relatively low. **In** particular, control may be performed without programming, light sensors, time clocks or other software, and by having the solar modules and the actuator only. Therewith, the solar tracker is relatively low tech, relatively light, relatively reliable and relatively robust, even under relatively severe conditions, such as moisture, heat and wind. This further contributes to a relatively low maintenance requirement and relatively high reliability.

Thirdly, the solar tracker is relatively efficient as no power need to be consumed by complex computer technology, chips or timers, and/or by converting power for charging a backup battery for rotating into the sunrise position. **In** particular, the solar tracker may follow the sun very effectively as the positioning of the tracking solar module does not depend on its ability to receive morning rays. Therewith, the solar tracker may function very efficiently and may achieve an electric and/or heating power at a 40-50% higher yield, i.e. by being more efficient, compared to existing systems. **In** use, this results in a higher amount of power available for external devices, e.g. such that an energy storage, as a battery, may be charged 40-50% faster compared to the prior art.

As a result, the present invention provides a solar tracker that has a relatively high power efficiency, is relatively durable and easy to maintain, and is therefore relatively well-suited for stand-alone use in mobile application, even in remote areas, such as with campers, military use or in humanitarian aid after disasters or in crises. Therewith, the invention may provide a viable alternative for costly and/or polluting fossil fuel power by providing electricity generation at temporary sites or (micro) power grids. Also, for solar parks or photovoltaic power stations the invention advantageously contributes to achieving an electric and/or heating power at a 40-50% higher yield on a constrained, e.g. a limited, land surface.

The support frame may include one or more legs that must be supported on the ground. The support frame can be stationary, e.g. configured to be permanently fixed into the ground, for example by a foundation, and/or the support frame can be mobile, e.g. configured to be temporarily placed on the ground. The supporting frame may include one or more attachment points for anchoring elements, such as fixed in concrete, bolted or otherwise permanently anchored, or in a mobile application with ropes, straps or other anchoring devices such as pegs and guy ropes, for temporary anchoring during very high wind loads. A leg may extend substantially in vertical direction. A leg may be provided with a flat foot surface, e.g. a foot surface pivotably connected to the leg. As such, the leg may be positioned on an uneven or inclined surface. The legs may be telescopic and/or comprise multiple leg sections that can be attached to each other in dependence of a desired leg length, e.g. in dependence of terrain requirements and/or a desired rotation axis inclination.

The rotation axis may be formed by a shaft connected to the one or multiple legs. The rotation axis may extend substantially in horizontal direction, for example horizontally and/or having an inclination, such that the main receiving surface can be inclined towards a southern direction to increase power supply. The inclination may for example be 5-40 degrees with respect to a horizontal, such as 10-30 degrees, preferably 15-25 degrees. Such an angle has been found to increase incident solar light. Further, it has been found that under this inclination, wind loads provide a down force on the main solar module that contributes to the solar tracker remaining stably supported on the ground. The inclination may be adaptable, for example by having adjustable legs, e.g. telescopic legs. By having an adaptable inclination, the optimal angle may be selected for the position of the solar tracker with respect to the equator.

For example, at least one leg may be provided on each side of the main solar module. For example, each leg may be connected to a foundation, for example a concrete foundation.

In an embodiment, at least two legs are provided on each side of the solar module, for example connected to each other in an A-shape or pyramid shape, as such shape has been found to provide sideways stability to the support frame. Especially in a mobile embodiment, e.g. wherein the support frame may at least be partially disassembled, this configuration allows for a relatively high strength, e.g. without concrete foundation, and compact storage. It has been found that this way, a relatively strong and compact support frame may be provided which contributes to robustness and stand-alone functioning of the solar tracker. The respective leg or legs on each side of the solar module may be provided with different lengths for positioning the main solar module at the desired inclination. A minimum length of each leg may be equal to or lower than a maximum length of the of the main receiving surface to facilitate compact storage.

The main solar module main be rotatable about a single rotation axis. As such, the number or pivot points is relatively low, which contributes to reliability. In order to obtain sufficient strength with a relatively large main receiving surface that can withstand wind, it was often necessary in the prior art to provide a relatively heavy support frame. Surprisingly, it has been found that by having a single rotation axis and/or legs connected to each other in an A- or pyramid shape, the support frame is relatively strong to withstand high wind loads, but is also relatively light and easy to disassemble.

In an embodiment, the solar tracker has a weight of less than 25 kg, for example less than 20 kg when the main solar module comprises a monocrystalline photovoltaic panel. The main solar module with monocrystalline panels may for example have a weight of 12 kg. The support frame may have a weight of less than 10 kg, such as 5 kg or less, such that the total weight of the solar tracker may be 17 kg or less. The weight may be even lower when used with other main solar modules, e.g. a plastic photovoltaic panel typically having a weight of 3 kg, such that the solar tracker with two plastic panels and a frame of 5 kg or less could weigh 11 kg or less.

Multiple legs may be connected to each other via a connecting element. The connecting element may be pivotably connected to the legs, such that the legs may be moved between an operation position, in which the legs are not parallel to each other, and a collapsed storage position wherein the legs occupy less volume, e.g. wherein the legs are arranged parallel to each other. The connecting element may comprise a blocking element, such as a pall, that is configured to limit the movement of the legs relative to each other. As such the maximum distance of the legs at the ground surface may be determined by the blocking element.

The connecting element may be detachable from the shaft. As such, the solar tracker may be disassembled into a shaft and one or more legs, e.g. for storage or transport.

In an embodiment, the connecting element comprises a block part connected to the shaft and a holder part connected to the legs and configured to be releasably couplable to the block part.

Multiple connecting elements may be provided, e.g. each having a block part on opposite sides of the shaft, and corresponding holding parts on respective legs. The multiple connecting elements may have different dimensions. This way, correct assembly of the main solar module may be facilitated.

The main solar module, the tracking solar module and/or the return solar module may comprise an inverter and/or one or more solar panels, such as photovoltaic panels, for example monocrystalline photovoltaic solar panels. It has been found that these solar panels are relatively efficient and reliable even under harsh conditions and thereby contribute to stand-alone operation, while providing a relatively efficient power conversion. Preferably, the tracking solar module and the return solar module provide a DC current and are connected to a DC actuator without inverter to reduce the number of components and thereby contribute to reliability of the solar tracker.

The solar tracker may comprise a mounting element, such as a plate, configured to rotatably mount the main solar module to the support frame. The mounting element may be rotatably attached to the shaft via one or more bearings and may comprise one or more attachment points for a solar panel. Multiple solar panels may be attachable to the mounting element. In this way, by means of one mounting element with one electric motor, a large and flexible area of panels can be rotated around the rotation axis, or panels may be replaceable relatively easy.

The main solar module may be movable between a sunset position and a sunrise position, which may be opposite to each other. For example, the sunrise position may have an angle of at least 45 degrees, e.g. 50 degrees, with respect to the horizontal and/or the sunset position may have an opposite angle of at least 45 degrees, e.g. 50 degrees, with respect to the horizontal. The main solar module may, between the sunrise position and the sunset position receive incident light spanning an angle of at least 200 degrees, e.g. at least 275 degrees. For example, when the sunrise position and the sunset position have opposite angles of 50 degrees with respect to the horizontal, the main solar module may receive incident light spanning an angle of 50+50+180 = 280 degrees.

The return solar module may be arranged on the support frame towards the sunrise position. In particular, a receiving surface of the return solar module may be substantially parallel to the main receiving surface in the sunrise position.

The return solar module may be covered by another object, e.g. by covering at least 50% of the surface area, such as at least 75%. The return solar module may be covered by blocking or limiting incident sunlight, e.g. by limiting a free beam angle around the return solar module. The return solar module may be positioned to be covered by the main solar module, e.g. by the solar panel or by the mounting arrangement, and/or by an object rotating with the main solar module, such as the tracking solar module, or a covering element, e.g. a covering flap.

Additionally or alternatively, the return solar module may be rotatably mounted and configured to counter-rotate with respect to the main solar module, e.g. the actuator may be configured to move the return solar module in a direction opposite to the main solar module.

The return solar module may be separate from the tracking solar module. For example, the return solar module and the tracking solar module may be separate photovoltaic panels. This way, relatively accurate tracking may be performed by the tracking solar module, which may be dimensioned and/or positioned for tracking, whereas the return solar module may be dimensioned and/or positioned for returning the main solar module between sunset and sunrise.

In an embodiment, the actuator is configured to be powered by the tracking solar module and the return solar module only. This way, the solar tracker can advantegously be used without using additional external power, e.g. by means of a battery.

The actuator may be electrically connected to the tracking solar module and to the return solar module only, e.g. directly or via a relay, wherein power is provided to the actuator via an external power source, e.g. a battery and/or the main solar module.

In an embodiment, the return solar module is provided stationary on the support frame. It has been found that this way, a relatively simple and durable construction is obtained having a low amount of moving parts.

Furthermore, the stationary mounting on the support frame allows the return solar module to be relatively wind proof and/or to be mounted relatively easily. In particular, this way, no mounting locations may be necessary on the main solar module, on the actuator and/or on the tracking solar module for mounting the return solar module. The stationary mounting may reduce the load on the actuator as the return solar module is stationary and does not need to be rotated.

The main solar module and the tracking solar module may provide a relatively balanced weight load to the actuator, e.g. a load that is symmetrical about the rotation axis. This may be advantageous for durability of the axis and/or of the actuator and/or may contribute to strength of the solar tracker for withstanding environmental conditions.

By having the return solar module arranged on the support frame, the return solar module may be aligned by aligning the support frame with the sun.

In an embodiment, in the sunrise position, the main solar module covers the return solar module for incident light, and, in the sunset position, the main solar module is moved away from the return solar module such that the return solar module is uncovered.

It has been found that advantageously, the return solar module and the main solar module may be positioned with respect to each other such that the main solar module substantially limits the amount of sunlight incident in the return solar module in the sunset position, e.g. such that no additional covering elements are required. The amount of light incident in the return solar module may be controlled by the main solar module being arranged to move between the return solar module and the sun.

In an embodiment, the return solar module is positioned such that a lower edge thereof is substantially at the same height as a lower edge of the main solar module in the sunrise position. This way, the return solar module may be covered completely by the main solar module.

In particular, this way, the return solar module may be in the shade of the main solar module when covered by the main solar module. Thus, when the main solar module is in the sunset position, the return solar module may be maximally exposed to sunlight. The return solar module may be minimally exposed to sunlight when the main solar module is arranged in the sunrise position. As such, the output of the return solar module may be controlled by the position of the main solar module. For example, by aligning the main solar module with the sun, e.g. by positioning the support frame, the return solar module may also be aligned with the sunrise position.

In an embodiment, the support frame comprises at least two legs to be supported on the ground surface and a coupling shaft that horizontally couples the at least two legs, wherein the main solar module is mounted to the at least two legs via the shaft for rotating about the rotation axis, and wherein the return solar module is stationary mounted on at least one of the legs. It has been found that this way, a relatively stable construction is obtained having a low amount of rotating parts to improve reliability.

The return solar module may be arranged between the at least two legs, e.g. such that the return solar module does not protrude out from an outer circumference of the device spanned by the at least two legs. This way, the return solar module may be protected from damage, e.g. from moving objects in the environment.

In an embodiment, the shaft is stationary, wherein the main solar module is rotatably mounted to the shaft via one or more bearings, e.g. via the mounting element by having the mounting element located between the one or more bearings and the main solar module.

In this embodiment, the actuator is attached to the main solar module, e.g. via the mounting element, to rotate therewith around the stationary axis. As such, stability and reliability are further improved. Additionally, this allows a relatively compact construction, such that disassembly of the solar tracker is facilitated and a relatively compact portable suitcase is made possible.

The solar tracker may comprise a rotation limiter to limit rotation of the main solar module, e.g. beyond the sunset and/or sunrise position. The rotation limiter may comprise a pin to physically limit rotation of the main solar module. It has been found that, as a result of varying sunlight with location and weather, the main solar module may be moved too far, e.g. through the sunset position and/or sunrise position, which could potentially result in damage, e.g. of the support frame or of cables. By having a rotation limiter, the sunset position and/or sunrise position may be predetermined reliably.

Further, having a rotation limiter allows the tracking solar module and/or the return solar module to be over dimensioned. This way, less strict requirements need to be imposed on the dimension and position of the tracking solar module and the return solar module for achieving a desired sunrise and/or sunset position. Further, this allows enough electric power for powering the actuator to be generated under varying conditions, for example, the return solar module may still generate power to power the actuator in the sunrise position, whereas further rotation of the main solar module is avoided by the rotation limiter.

In an embodiment, the solar tracker comprises at least one termination sensor to detect arrangement of the main solar module in the sunrise position and/or in the sunset position. The termination sensor may be configured to activate and/or deactivate the actuator on the basis of the detected arrangement.

The termination sensor may be a proximity sensor or switch arranged on the support frame, the main solar module and/or on the actuator, and e.g. be connected to the control arrangement. The termination sensor may be a switch configured to switch the power to the actuator on the basis of the position of the solar module, e.g. upon physically engaging with a contacting part. The termination sensor may be a magnetic switch configured to switch the actuator off upon magnetic detection of the main solar module, e.g. when the magnetic field exceeds a predetermined threshold. For example, magnets may be attached to the main solar module and/or to the mounting element.

Additionally or alternatively, the termination sensor may be configured to alter the power to the actuator in another way, for example by having a variable resistance on the basis of the position of the solar module. The termination sensor may comprise a proximity sensor, such as inductive, capacitive, Hall or optical sensor.

By having a termination sensor, the solar tracker may be protected against damage, e.g. due to wind loads, for example when the main solar module would rotate further than expected while being moved by the actuator.

The termination sensor may comprise a variable resistor having a maximum resistance when the main solar module is closest, such that the motor receives little to no power in this position and that further rotation and possible damage is prevented.

The rotation limiter, e.g. each termination sensor, may comprise a bypass, e.g. a diode, configured to bypass the termination sensor when the actuator is activated to move in a predetermined direction. This way, the bypass allows the actuator to rotate the main solar module away from the sunset position and/or sunrise position, whereas too much unwanted movement in opposite direction can be avoided.

In an embodiment, the actuator, return solar module, the tracking solar module and/or the termination sensor are electrically connected to each other in series. This way, the actuator may be controlled using a low-complexity circuitry that is relatively easy to repair and maintain and has little or no parasitic power usage.

In an embodiment, the solar tracker is provided with an alignment marking for aiding alignment of the solar tracker with respect to the sun. The alignment marking may aid alignment of the rotation axis towards the north and/or of the return solar module towards an expected sunrise direction, e.g. to the east.

In an embodiment, the solar tracker is provided with a compass, gyroscope or GPS for aiding alignment of the solar tracker with respect to the sun, e.g. for aiming the return solar module towards an expected sunrise direction, e.g. to the east.

The alignment marking and/or the compass, gyroscope or GPS may for example be provided on the main solar module, e.g. on the main receiving surface, on the mounting element and/or on the support frame.

It has been found that by aligning the frame to the east, the power supply may be maximised, and/or reliable response of the return solar module to a sunset may be achieved.

In an embodiment, the return solar module and the tracking solar module each have a rated electric power, e.g. rated peak voltage, that is substantially the same, e.g. wherein the rated electric power is smaller than a rated electric power, e.g. rated peak voltage, of the main solar module. By having a similar or smaller volume, the total volume of the solar tracker remains compact and susceptibility to winds is reduced.

In an embodiment, the actuator is provided radially away from the rotation axis, e.g. from the shaft, and configured to rotate the main solar module via a transmission. By having the actuator not coaxially aligned with the rotation axis, it has been found that the actuator is configured to act on the outside (rather than at the centre) of the axis, and thus has a larger torque arm. The actuator may comprise a rotational drive unit, such as a rotational motor. It has been found that rotational drives are relatively reliable and easy to repair compared to translational drives as pistons. By acting out of the centre of the axis, a relatively strong and robust setup with low number of moving components is provided. The transmission may for example comprise one or multiple gears, such as a rack and pinion gear or worm gear, which are relatively compact and can deliver a relatively high force.

In an embodiment, the actuator comprises an electric motor configured to rotate the shaft via a worm gear transmission. The worm gear provides a relatively high force transmission. Further, the worm gear may be dimensioned such that a friction limits unwanted movement of the main solar module when the actuator is not activated.

In an embodiment, the control arrangement comprises a first one of the tracking solar modules and a second one of the tracking solar modules arranged in opposite orientations with respect to each other and/or on opposite sides of the main solar module.

In an embodiment, the first tracking solar module and the second tracking solar module are oppositely electrically connected to the actuator to power the actuator in a first direction or in an opposite second direction, respectively.

The first tracking solar module and the second tracking solar module may be electrically connected to each other in series.

In an embodiment, the main solar module, the tracking solar module and/or the return solar module are detachable from the support frame. As such, storage and/or moving the solar tracker to another location is facilitated.

In an embodiment, the solar tracker can be carried as a case. In particular, the main solar module may form a storage space. In a further embodiment, at least two solar panels that when assembled form the main receiving surface, when disassembled, are attachable parallel to each other to form a case. The solar panels may comprise one or more attachment elements for attaching the at least two solar panels to each other, e.g. when arranged parallel. The attachment elements may be dimensioned such that, when the solar panels are attached parallel to each other, the storage space is provided therebetween for storing other components, e.g. the legs, the actuator, the tracking solar module and/or the return solar module. In an embodiment, all components may be stored in the case formed by the two solar panels such that the entire solar tracker can be carried.

It has been found that the solar tracker having one or more of the features of the embodiments described herein allows for relatively reliable stand-alone use, and may therefore also provide benefits in solar trackers not provided with a return solar module according to the invention. Such a solar tracker according to claim 1 and/or any of the embodiments disclosed herein, not comprising the return solar module may therefore also be provided in any of the embodiments as disclosed herein and may be made subject of divisional patent applications.

For example, various advantages with respect to efficiency, reliability and compactness may be achieved by having a Solar tracker for stand-alone power supply, comprising a support frame for supporting the solar tracker on a ground surface; a main solar module to convert incident light into heat for heating an object and/or into electric power for power supply to external devices, e.g. an energy storage such as a battery, having a main receiving surface rotatably mounted to the support frame around a rotation axis; an actuator, e.g. an electric motor, to move the main solar module with respect to the support frame around the rotation axis between a sunrise position and a sunset position; a control arrangement to control the actuator, comprising a tracking solar module electrically connected to the actuator to convert incident light into electric power for powering the actuator, wherein the tracking solar module is coupled to the main solar module to rotate therewith, wherein the tracking solar module is positioned with respect to the main receiving surface such that, when the main receiving surface is faced away from the sun, the tracking solar module receives incident light and the actuator can be powered by the tracking solar module to rotate the main receiving surface towards the sun, and when the main receiving surface is faced towards the sun, the tracking solar module generates insufficient power and the actuator cannot be activated thereby, wherein the main solar module, the tracking solar module and/or the return solar module are detachable from the support frame.

In an embodiment, the support frame comprises at least two legs to be supported on the ground surface and a coupling shaft that horizontally couples the at least two legs, wherein the main solar module is mounted to the at least two legs via the shaft for rotating about the rotation axis, and wherein the return solar module is stationary mounted on one of the legs.

In an embodiment, the shaft is stationary, e.g. rigidly couplable to the support frame, wherein the main solar module is rotatably mounted to the shaft via one or more bearings, and wherein the actuator is attached to the main solar module to rotate therewith around the stationary axis.

It has been found that this way, a relatively compact construction can be obtained that promotes a compact packed arrangement in a suitcase while providing sturdy support during various environmental conditions.

In an embodiment, the actuator comprises a worm gear transmission and an electric motor configured to rotate the shaft via the worm gear transmission. It has been found that this configuration is relatively compact, strong, and provides friction resistance to unwanted movements, e.g. due to wind loads.

In an embodiment, the main solar module, the tracking solar module and/or the return solar module, when detached from the support frame, can be arranged in a packed position in which the solar tracker can be carried as a single suitcase. This way, the solar tracker may be carried conveniently.

The main solar panel may for example be provided with mounting arrangements, for mounting the frame, the tracking solar module and/or the return solar module thereto, e.g. on a rear side thereof. In particular, when the main solar panel comprises two segments, e.g. two photovoltaic panels, the main solar panel segments may be attachable to each other in a packed position, and when attached to each other, define a storage space in which the frame, the tracking solar module and/or the return solar module can be arranged. The mounting arrangements may be configured to releasably mount the frame, the tracking solar module and/or the return solar module to the main solar module and may for example, comprise clamps, bands, clasps, threads, magnets or any other mounting means. The mounting arrangements may be arranged in the storage space.

According to an aspect, the invention relates to a power generation device comprising
a power connector for power supply to an external device, e.g. an energy storage such as a battery and/or a heating connector for attaching a heating system, e.g. an oven, furnace, building or water reservoir heater; and
the solar tracker according to any of the embodiments disclosed herein, wherein the main solar module is connected to the heating connector and/or electrically connected to the power connector for supplying converted electric power to the external power device. According to an aspect, the invention relates to a method for stand-alone power supply using a solar tracker according to any of the embodiments disclosed herein and/or a modular power generation device according to any of the embodiments disclosed herein.

The method may comprise the steps of: supporting the support frame on a ground surface; aligning the return solar module towards an expected sunrise direction; supplying electric power with the main solar module and supplying electric power with the tracking solar module to rotate the main receiving surface towards the sunset position for tracking the sun, thereby uncovering the return solar module; and supplying electric power with the return solar module to rotate the main receiving surface back towards the sunrise position.

In an embodiment, the step of rotating the main receiving surface into the sunrise position is performed while no electric power is supplied with the main solar module and with the tracking solar module. In contrast with the prior art, the invention may advantageously enable return of the main solar module from a sunset position to the sunrise position without the use of an external power source.

The power generation device and/or the method may be provided in any of the embodiments as disclosed herein, and thereby provide corresponding advantages as explained herein for the solar tracker.

### Brief description of drawings

Further characteristics of the invention will be explained below, with reference to embodiments, which are displayed in the appended drawings, in which:
Figure 1 schematically depicts a solar tracker according to an embodiment of the invention;
Figure 2 schematically depicts a solar tracker according to an embodiment of the invention;
Figure 3A schematically depicts an electric connection scheme of the solar tracker according to an embodiment, compatible with Fig. 1;
Figure 3B schematically depicts an electric connection scheme of the solar tracker according to an embodiment;
Figure 3C schematically depicts an electric connection scheme according to another embodiment wherein the rotation limiter comprises multiple termination sensors;
Figure 3D schematically depicts the rotation limiter of Fig. 3C when the main solar module is tracking the sun between the sunrise and the sunset positions;
Figure 3E schematically depicts the rotation limiter of Fig. 3C when the main solar module is in the sunset position;
Figure 3F schematically depicts the rotation limiter of Fig. 3C when the main solar module is away from the sunset position, moving towards the sunrise position; and
Figure 3G schematically depicts the rotation limiter of Fig. 3C when the main solar module is in the sunrise position;
Fig. 4A schematically depicts the solar tracker according to an embodiment in the invention, arranged in the sunrise position, having an angle A1 of 50 degrees;
Fig 4B, schematically depicts the solar tracker of Fig. 4A tracking the sun between the sunrise and the sunset positions;
Fig. 4C schematically depicts the solar tracker of Fig. 4B when arranged in the sunset position, having an angle A2 of 50 degrees;
Figure 5A schematically depicts a solar tracker according to an embodiment of the invention, when arranged in the sunrise position;
Figure 5B schematically depicts the solar tracker of Fig. 5A, when tracking the sun, e.g. in the afternoon;
Figure 5C schematically depicts the solar tracker of Fig. 5A, when tracking the sun;
Figure 5D schematically depicts the solar tracker of Fig. 5A, when arranged in the sunset position;
Figure 6 schematically depicts a bottom view of a solar tracker according to an embodiment;
Figure 7A schematically depicts an assembled view of a solar tracker according to an embodiment, wherein the solar tracker is mobile and
Figure 7B schematically depicts the solar tracker of Fig. 7B, wherein the panels arranged in a packed position.

Throughout the figures, the same reference numerals are used to refer to corresponding components or to components that have a corresponding function.

### Detailed description of embodiments

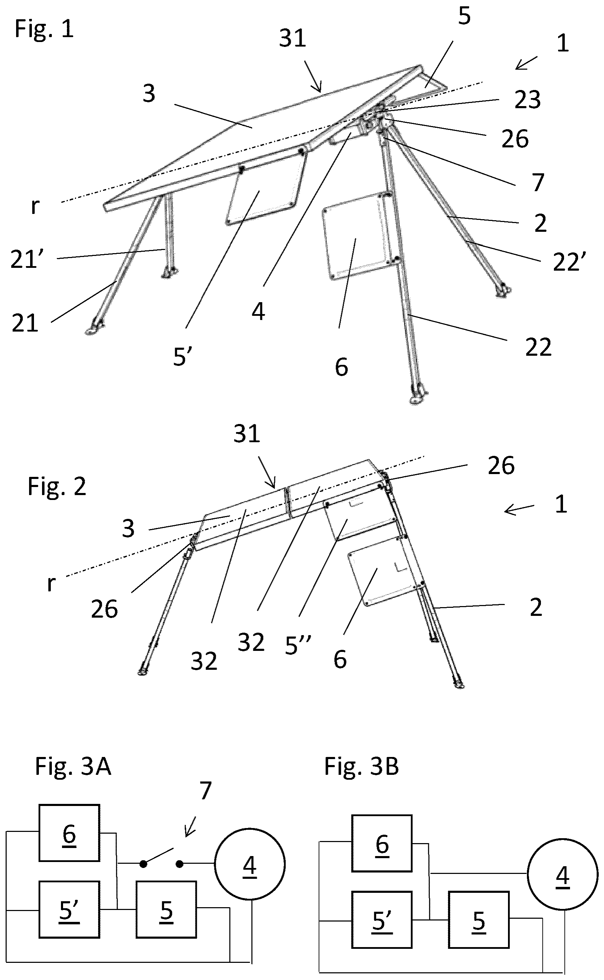

Figure 1 schematically depicts a solar tracker 1 for stand-alone power supply. The solar tracker comprises a support frame 2 for supporting the solar tracker on a ground surface; a main solar module 3 to convert incident light into electric power for power supply to external devices, having a main receiving surface 31 rotatably mounted to the support frame 2 around a rotation axis r.

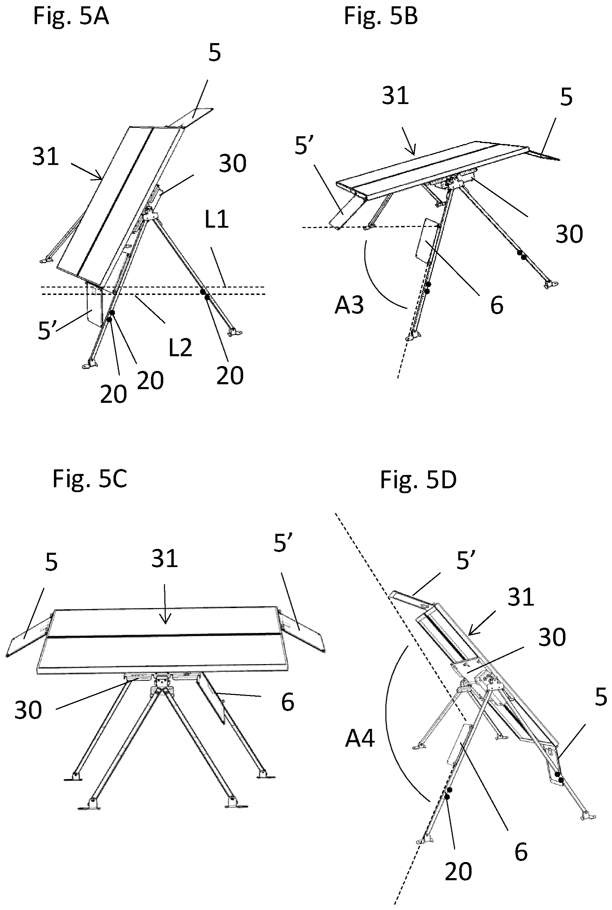

The solar tracker 1 comprises an actuator 4 to move the main solar module 3 with respect to the support frame 2 around the rotation axis r between a sunrise position, as depicted in Fig. 5A, and a sunset position, as depicted in Fig. 5D.

The solar tracker 1 comprises a control arrangement 5 to control the actuator 4, comprising a tracking solar module 5 electrically connected to the actuator 4 to convert incident light into electric power for powering the actuator. The tracking solar module 5 is coupled to the main solar module 3 to rotate therewith, and the tracking solar module is positioned with respect to the main receiving surface 31 such that, when the main receiving surface is faced away from the sun, the tracking solar module 5 receives incident light and the actuator can be powered by the tracking solar module to rotate the main receiving surface 31 towards the sun. When the main receiving surface 31 is faced towards the sun, the tracking solar module 5 generates insufficient power and the actuator 4 cannot be activated thereby, such that the main receiving surface 31 is not moved away from the sun.

The control arrangement further comprises a return solar module 6 electrically connected to the actuator 4 to convert incident light into electric power for powering the actuator. The return solar module is positioned with respect to the main receiving surface 31 such that, when the main receiving surface is arranged in the sunset position, the return solar module is uncovered for receiving incident light and the actuator 4 can be activated by the return solar module 6 to rotate the main receiving surface into the sunrise position. When the main receiving surface 31 is in the sunrise position, the return solar module is covered to block incident light, such that the actuator cannot be activated by the return solar module such that the main receiving surface 31 is not moved away from the sun.

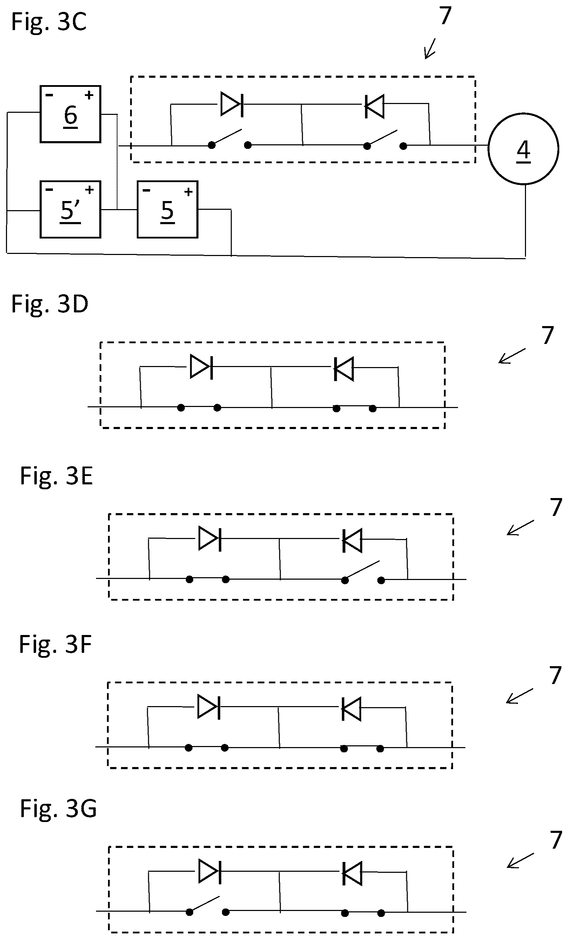

The control arrangement comprises a first one 5 of the tracking solar modules and a second one 5' of the tracking solar modules arranged in opposite orientations with respect to each other and on opposite sides of the main solar module 3. The first tracking solar module 5 and the second tracking solar module 5' are oppositely electrically connected to the actuator, e.g. according to Fig. 3A, to power the actuator in a first direction or in an opposite second direction, respectively. The first tracking solar module 5 and the second tracking solar module 5' are electrically connected to each other in series. Therewith, the actuator can be powered by a voltage difference between them as a result in difference of incident sunlight, i.e. due to the sun being closer to the first 5 or the second 5' tracking solar module, to rotate the main receiving surface 31 towards the sun. When the main receiving surface is rotated towards the sun, e.g. perpendicular to incident sunlight, the respective voltages become balanced, such that the voltage difference between the first tracking solar module 5 and the second tracking solar module 5' approaches zero, and such that insufficient power is generated and the actuator 4 cannot be activated thereby. Therewith, solar tracking is performed without requiring timers or software are required. However, after the sun sets the main solar module 3 is arranged in the sunset position. In the past, external power would be required to rotate the main solar module back to a sunrise position,- or the solar module needed to be moved manually - and/or the maximum rotation angle A4 as depicted in Fig. 5A would be severely limited such that sunlight could still be incident on one of the solar modules, 5, 5', 3. By having the return solar module 6, return of the main solar module 3 at sunset is achieved, such that the solar tracker 1 is able to function stand-alone, without external power or heavy electronics or mechanisms, is more reliable and robust even in harsh weather, is made with simpler components and is easier to repair. In particular, the solar tracker 1 is able to function very efficiently.

The support frame 2 in this embodiment is mobile and comprises multiple legs 22, 22', 21, 21' extending substantially in vertical direction and configured to be positioned temporarily on the ground. The frame comprises multiple attachment points for anchoring elements. The legs 22, 22', 21, 21' are telescopic and provided with spring loaded pins 20, as depicted in Figs. 5A-5D, such that they can be retracted towards a minimum length that is equal to or lower than a maximum length of the main receiving surface 31. Each leg 21, 21', 22, 22' is provided with a foot surface pivotably connected thereto. The rotation axis r is formed by a shaft 23 connected to the legs 22, 22', 21, 21' and extending substantially in horizontal direction under an inclination of 10-30 degrees, in particular 15-25 degrees, such as 20 degrees.

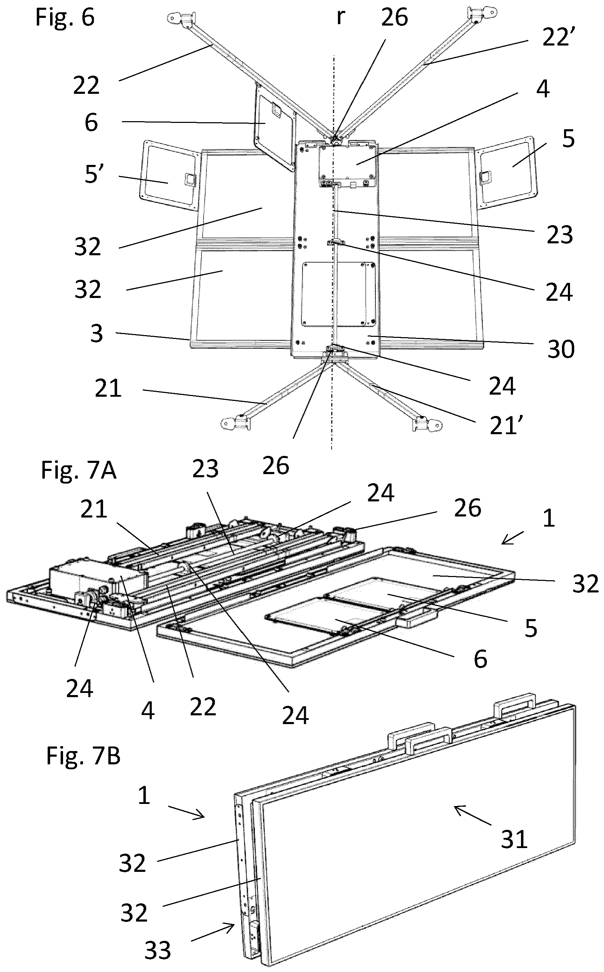

Two legs 21, 21' and 22, 22' are each provided connected to each other in an A-shape or pyramid shape on each side of the shaft 23 and the main solar module 3 via a respective connecting element 26 that is pivotably connected to the respective legs such that the legs 21, 21' and 22, 22' are movable between an operation position, as shown in Fig. 1, in which the legs are not parallel to each other, and a collapsed storage position, as depicted in Fig. 7A, wherein the legs occupy less volume and wherein the legs are arranged parallel to each other. Legs 21, 21' are provided with a different length than legs 22, 22'. The solar tracker has a weight of less than 25 kg, in particular less than 20 kg in this embodiment. The support frame 2 has a weight of less than 10 kg, in particular 5 kg or less, and the solar panels in the embodiment having monocrystalline solar panels each have a weight of 6 kg, such that the main solar module weights 12 kg. Each connecting element 26 is detachable from the shaft 23 and comprises a blocking element 260, such as a pall or pin, to limit the movement of the legs pivotably connected thereto relative to each other.

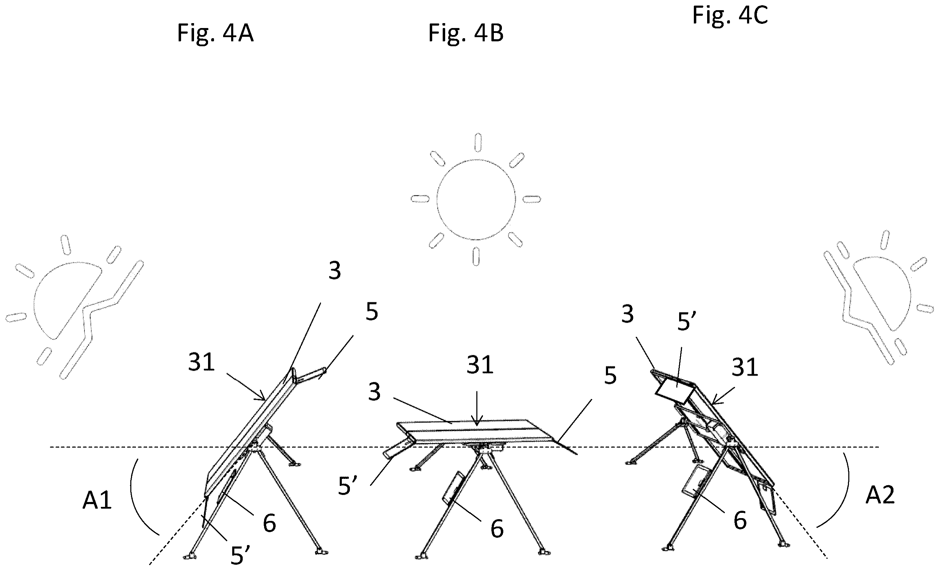

The main solar module 3 comprises an inverter and one or more solar panels 32, such as photovoltaic panels, for example monocrystalline solar panels. In Fig. 1 one panel is depicted, whereas in Figs. 2-7B two panels 32 are depicted, however, another number of panels may be provided. The tracking solar module 5 in Fig. 1 comprises two solar panels 5, 5', whereas in the embodiments of Fig. 2 and 3B one tracking solar module 5 is provided. The return solar module comprises a solar panel. The tracking solar module 5 and the return solar module 6 in the shown embodiments provide a DC current and are connected to a DC actuator 4, but may in principle be converted to a AC actuator via an inverter.

The solar tracker of Fig. 6 comprises a mounting element 30, such as a plate, configured to rotatably mount the main solar module comprising solar panels 32 to the legs 21, 21', 22, 22' of the support frame. The mounting element 30 is rotatably attached to the shaft 23 via one or more bearings 24 and comprises attachment points for the solar panels 32.

The main solar module 3 is movable between a sunset position as shown in Fig. 5D and a sunrise position as shown in Fig. 5A, which are opposite to each other, in particular, at least 150 degrees, such as at least 170 degrees away from each other around the rotation axis r. The return solar module 6 is arranged on the support frame 2 towards the sunrise position such that the receiving surface of the return solar module 6 is substantially parallel to the main receiving surface 31 in the sunrise position.

The return solar module 6 can be covered by another object, such as the main solar module 3 in Fig. 1, and/or a protruding a covering element or covering flap 5" attached thereto, as depicted in Fig. 2. In the sunrise position, at least 50% of the surface area of the return solar module 6, such as at least 75%, is covered by blocking or limiting incident sunlight, e.g. by limiting a free beam angle A3, A4 around the return solar module 6. **In** other embodiments, the return solar module 6 may be rotatably mounted and configured to counter-rotate with respect to the main solar module, e.g. the actuator may be configured to move the return solar module in a direction opposite to the main solar module.

The actuator 4 is configured to be powered by the tracking solar module 5 and the return solar module 6 only and is electrically connected to the tracking solar module 5 and to the return solar module 6 only, e.g. directly as depicted in Figs. 3A and 3B, or via a relay, wherein power is provided to the actuator via an external power source, e.g. an energy storage such as a battery and/or the main solar module.

The return solar module 6 is provided stationary on the support frame 2. In the sunrise position, the main solar module 3 covers the return solar module 6 for incident light, and, in the sunset position, the main solar module 3 is moved away from the return solar module such that the return solar module is uncovered and light can be incident along free beam angle A4.

No mounting locations are necessary on the main solar module 3, on the actuator 4 and/or on the tracking solar module 5 for mounting the return solar module 6. The main solar module 3 and the tracking solar module 5 provide a relatively balanced weight load to the actuator, i.e. a load that is symmetrical about the rotation axis r. As the return solar module is arranged on the support frame 2, the return solar module may be aligned by aligning the support frame with the sun.

The return solar module 6 and the main solar module 3 are positioned with respect to each other such that the main solar module 3 substantially limits the amount of sunlight incident in the return solar module 6 in the sunset position, i.e. such that no additional covering elements are required. The amount of light incident in the return solar module 6 is therewith controlled by the main solar module 3 being arranged to move between the return solar module 6 and the sun, e.g. to move into the sunrise position.

The return solar module 6 is arranged between the at least two legs 21, 22, e.g. such that the return solar module does not protrude out from an outer circumference of the device 1 spanned by the at least two legs 21, 22.

In Fig. 5A, the return solar module 6 is positioned such that a lower edge L2 thereof is substantially at the same height as a lower edge L1 of the main solar module 3 in the sunrise position, and the return solar module 6 is covered completely by the main solar module 3.

The support frame 2 comprises at least two legs 21, 21', 22, 22' to be supported on the ground surface and a coupling shaft 23 that horizontally couples the at least two legs, wherein the main solar module 3 is mounted to the at least two legs via the shaft 23 for rotating about the rotation axis, and the return solar module 6 is stationary mounted on one of the legs 21, 21', 22, 22'.

The shaft 23 is stationary and the main solar module is rotatably mounted to the shaft 23 via one or more bearings 24. The actuator 4 is attached to the main solar module 3 to rotate therewith around the stationary axis 23.

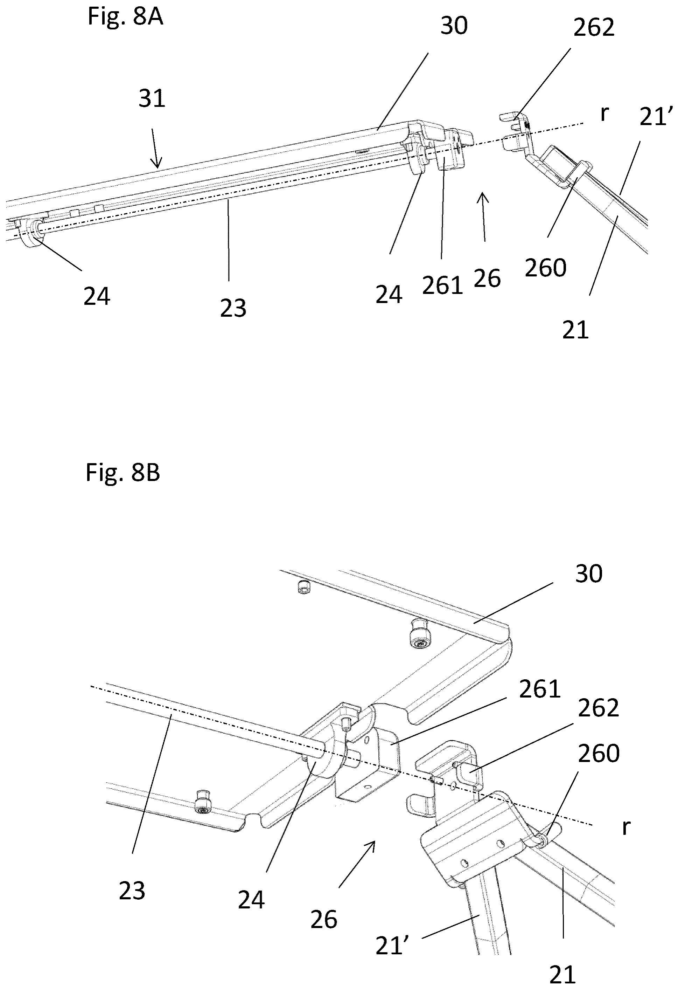

A connecting element 26 is provided, as shown in Figs. 8A-8D. The connecting element 26 comprises a block part 261 connected to the shaft 23 and a holder part 262 connected to the legs and configured to be releasably couplable to the block part. Two block parts 261 are provided, one on each side of the shaft 23, and corresponding holder parts 262 are provided on both sets of legs 21, 21' and 22, 22' such that in total two connecting elements 26 are provided, having mutually different dimensions.

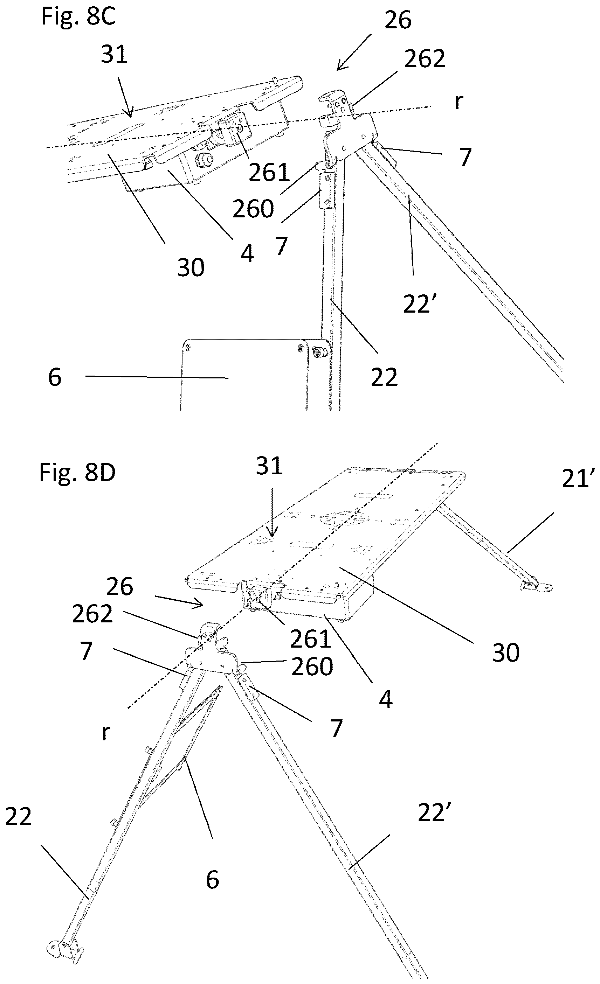

In some embodiments, the solar tracker may comprise a rotation limiter to limit rotation of the main solar module, e.g. beyond the sunset and/or sunrise position. The rotation limiter may comprise a pin in some embodiments. The solar tracker 1 comprises at least one termination sensor 7, as e.g. shown in Fig. 8C, to detect arrangement of the main solar module 3 in the sunrise position and/or in the sunset position and to activate and/or deactivate the actuator on the basis of the detected arrangement. In the shown embodiment, the termination sensor 7 is a magnetic switch arranged on the support frame 2, and configured to switch the actuator off upon magnetic detection of the main solar module the magnetic field exceeds a predetermined threshold. Magnets (not shown) for the magnetic field are attached to the main solar module at corresponding location. In other embodiments, the termination sensor 7 may comprise another type of diode or sensor, such as an inductive, capacity, Hall or optical sensor, e.g. having a variable resistance. The termination sensor can be connected in series to the actuator, as shown in Fig. 3A.

As depicted in the embodiment of Figs. 3A, the actuator 4 is connected in series with the return solar module 6, the second one of the tracking solar module 5' and/or the termination sensor 7 for moving in one direction, and parallel to the first one of the tracking solar module 5. In the embodiment of Fig. 3B, no termination sensor is provided, and in Fig. 3C, two termination sensors are provided, e.g. on corresponding opposite legs 22, 22' as shown in Fig. 8D. In Fig. 3C, the rotation limiter 7 comprises a bypass, in particular a diode, configured to bypass the respective termination sensor when the actuator is activated to move in a predetermined direction. This way, the bypass allows the actuator to rotate the main solar module away from the sunset position and/or sunrise position, whereas too much unwanted movement in opposite direction can be avoided.

Turning back to Fig. 1, the frame 2 is provided with an alignment marking for aiding alignment of the return solar module towards an expected sunrise direction, e.g. to the east, and/or with a compass, gyroscope or GPS for aiding alignment of the return solar module towards an expected sunrise direction, e.g. to the east.

The return solar module 6 and the tracking solar module 5 each have a rated electric power, e.g. rated peak voltage, that is substantially the same and the rated electric power is smaller than a rated electric power, e.g. rated peak voltage, of the main solar module 3.

The actuator 4 is provided radially away from the rotation axis r, e.g. from the shaft 23, and is configured to rotate the main solar module via a transmission. The actuator 4 comprises a rotational drive unit, such as a rotational motor, connected via a transmission, in particular a worm gear.

As shown in Fig. 7A, the main solar module 3, the tracking solar module 5 and/or the return solar module 6 are detachable from the support frame. As such, storage and/or moving the solar tracker to another location is facilitated. In this embodiment, the solar tracker 1 can be carried as a case as depicted in Fig. 7B. At least two solar panels 32 of the solar tracker 1 are attachable parallel to each other to form the case. The solar panels 32 comprise one or more attachment elements for attaching the at least two solar panels 32 to each other, which are dimensioned such that, when the solar panels are attached parallel to each other, a storage space 33 is provided therebetween for storing all other components, e.g. the legs, the actuator, the tracking solar module and/or the return solar module.

Mounting arrangements for mounting the frame 2, the tracking solar module 5 and the return solar module 6 are provided on the rear side of at least one of the two photovoltaic solar panels 32 that form the two segments of the main solar module 3. The rear sides with the mounting arrangements are arranged in the storage space, and comprise clamps, bands, clasps, threads, magnets or any other mounting means.

In use, the main solar module 3 may be electrically connected to a power connector for supplying converted electric power to the external power user.

The support frame 2 may be supported on a ground surface; aligning the return solar module 6 towards an expected sunrise direction. Then, electric power can be supplied with the main solar module 3 and with the tracking solar module 5 to rotate the main receiving surface 31 towards the sunset position for tracking the sun, thereby uncovering the return solar module 6. During sunrise, when sunlight is incident on the return solar module 6, electric power can be supplied with the return solar module 6 to rotate the main receiving surface 31 back towards the sunrise position.

The step of rotating the main receiving surface 31 into the sunrise position ca be performed while no electric power is supplied with the main solar module 3 and with the tracking solar module 5. In contrast with the prior art, the invention may advantageously enable return of the main solar panel from a sunset position to the sunrise position without the use of an external power source.

### CLAUSES

Additional and/or alternative embodiments of the invention may be described as follows:
E1. Solar tracker (1) for stand-alone power supply, comprising:
   - a support frame (2) for supporting the solar tracker on a ground surface;
   - a main solar module (3) to convert incident light into heat for heating an object and/or into electric power for power supply to external devices, e.g. an energy storage such as a battery, having a main receiving surface (31) rotatably mounted to the support frame around a rotation axis (r);
   - an actuator (4), e.g. an electric motor, to move the main solar module (3) with respect to the support frame (2) around the rotation axis (r) between a sunrise position and a sunset position;
   - a control arrangement to control the actuator, comprising a tracking solar module (5) electrically connected to the actuator to convert incident light into electric power for powering the actuator,

   wherein the tracking solar module (5) is coupled to the main solar module (3) to rotate therewith,
   wherein the tracking solar module is positioned with respect to the main receiving surface such that, when the main receiving surface (31) is faced away from the sun, the tracking solar module (5) receives incident light and the actuator can be powered by the tracking solar module to rotate the main receiving surface towards the sun, and when the main receiving surface (31) is faced towards the sun, the tracking solar module generates insufficient power and the actuator cannot be activated thereby,
   **characterised in that** the control arrangement further comprises:
      a return solar module (6) electrically connected to the actuator to convert incident light into electric power for powering the actuator (4),
      wherein the return solar module is positioned with respect to the main receiving surface (31) such that, when the main receiving surface is arranged in the sunset position, the return solar module (6) is uncovered for receiving incident light and the actuator can be activated by the return solar module to rotate the main
      receiving surface into the sunrise position, and when the main receiving surface is in the sunrise position, the return solar module (6) is covered to block incident light, such that the actuator cannot be activated by the return solar module.
E2. Solar tracker according to embodiment E1, wherein the main solar module comprises a photovoltaic panel.
E3. Solar tracker according to embodiment E1 or E2 wherein the actuator (4) is configured to be powered by the tracking solar module (5) and the return solar module (6) only.
E4. Solar tracker according to any of the preceding embodiments, wherein the return solar module (6) is provided stationary on the support frame (2).
E5. Solar tracker according to any of the preceding embodiments, wherein, in the sunrise position, the main solar module (3) covers the return solar module (6) for incident light, and, in the sunset position, the main solar module is moved further away from the return solar module (6) such that the return solar module is uncovered.
E6. Solar tracker according to any of the preceding embodiments, wherein the control arrangement comprises a first one (5) of the tracking solar module and a second one (5') of the tracking solar module arranged in opposite orientations with respect to each other and/or on opposite sides of the main solar module (3),
   wherein the first tracking solar module (5) and the second tracking solar module (5') are oppositely electrically connected to the actuator to power the actuator in a first direction or in an opposite second direction, respectively,
   wherein the return solar module is electrically connected in parallel with the second one of the tracking solar module.
E7. Solar tracker according to any of the preceding embodiments, wherein the actuator (4), return solar module (6) and/or the termination sensor (7) are electrically connected to each other in series, e.g. wherein the return solar module is electrically connected in parallel with the tracking solar module.
E8. Solar tracker according to any of the preceding embodiments, wherein the return solar module (6) and the tracking solar module (5) each have a rated electric power, e.g. rated peak voltage, that is substantially the same, e.g. wherein the rated electric power is smaller than a rated electric power, e.g. rated peak voltage, of the main solar module (3).
E9. Solar tracker according to any of the preceding claims, further comprising at least one termination sensor (7) to detect arrangement of the main solar module in the sunrise position and/or in the sunset position, e.g. wherein the termination sensor is arranged on the support frame, wherein the termination sensor is electrically connected to the actuator to deactivate the actuator when the main solar module is arranged in the sunrise position and/or in the sunset position, respectively.
E10. Solar tracker according to any of the preceding claims, wherein the return solar module (6) is positioned such that a lower edge (L1) thereof is substantially at the same height as a lower edge (L2) of the main solar module (3) in the sunrise position.
E11. Solar tracker according to any of the preceding claims, wherein the support frame (2) comprises at least two legs (21, 21', 22, 22') to be supported on the ground surface, and a coupling shaft (23) that horizontally couples the at least two legs, wherein the main solar module (3) is mounted to the at least two legs via the shaft (23) for rotating about the rotation axis, and wherein the return solar module (6) is stationary mounted on one of the legs.
E12. Solar tracker according to the preceding claim, wherein the shaft (23) is stationary, e.g. rigidly couplable to the support frame (2), wherein the main solar module is rotatably mounted to the shaft via one or more bearings (24), and wherein the actuator (4) is attached to the main solar module to rotate therewith around the rotation axis formed by the stationary shaft.
E13. Solar tracker according to any of the preceding claims, wherein the main solar module, the tracking solar module and/or the return solar module are detachable from the support frame.
E14. Solar tracker according to the preceding claim, wherein the main solar module, the tracking solar module and/or the return solar module, when detached from the support frame, can be arranged in a packed position in which the solar tracker can be carried as a single suitcase.
E15. Solar tracker according to any of the preceding claims, wherein the actuator (4) comprises a worm gear transmission and an electric motor configured to rotate around the shaft (23) via the worm gear transmission.
E16. Solar tracker according to any of the preceding claims, further comprising an alignment marking for aiding alignment of the solar tracker with respect to the sun, e.g. such that the return solar module (6) is aligned towards an expected sunrise direction, e.g. to the east.
E17. Solar tracker according to any of the preceding claims, further comprising a compass, gyroscope or GPS for aiding alignment of the solar tracker with respect to the sun, e.g. such that the return solar module (6) is aligned towards an expected sunrise direction, e.g. to the east.
E18. Modular power generation device comprising:
   - a power connector for power supply to an external device, e.g. an energy storage such as a battery, and/or a heating connector for attaching a heating system, e.g. an oven, furnace, building or water reservoir heater; and
   - the solar tracker (1) according to any of the preceding claims, wherein the main solar module (3) is connected to the heating connector and/or electrically connected to the power connector.
E19. Method for stand-alone heating and/or power supply using a solar tracker according to any of the claims 1-17 and/or a modular power generation device according to claim 18, comprising the steps of:
   - supporting the support frame (2) on a ground surface;
   - aligning the return solar module (6) towards an expected sunrise direction;
   - supplying electric power with the tracking solar module (5) to rotate the main receiving surface (31) towards the sunset position for tracking the sun, thereby uncovering the return solar module (6); and
   - supplying electric power with the return solar module (6) to rotate the main receiving surface (31) back towards the sunrise position.
E20. Method according to the preceding claim, wherein the step of rotating the main receiving surface (31) into the sunrise position is performed while no electric power is supplied with the main solar module (3) nor with the tracking solar module (5).

## Claims

1. Solar tracker (1) for stand-alone power supply, comprising:
- a support frame (2) for supporting the solar tracker on a ground surface;
- a main solar module (3) to convert incident light into heat for heating an object and/or into electric power for power supply to external devices, e.g. an energy storage such as a battery, having a main receiving surface (31) rotatably mounted to the support frame around a rotation axis (r);
- an actuator (4), e.g. an electric motor, to move the main solar module (3) with respect to the support frame (2) around the rotation axis (r) between a sunrise position and a sunset position;
- a control arrangement to control the actuator, comprising a tracking solar module (5) electrically connected to the actuator to convert incident light into electric power for powering the actuator,
wherein the tracking solar module (5) is coupled to the main solar module (3) to rotate therewith,
wherein the tracking solar module is positioned with respect to the main receiving surface such that, when the main receiving surface (31) is faced away from the sun, the tracking solar module (5) receives incident light and the actuator can be powered by the tracking solar module to rotate the main receiving surface towards the sun, and when the main receiving surface (31) is faced towards the sun, the tracking solar module generates insufficient power and the actuator cannot be activated thereby,
**characterised in that** the control arrangement further comprises:
a return solar module (6) electrically connected to the actuator to convert incident light into electric power for powering the actuator (4),
wherein the return solar module is positioned with respect to the main receiving surface (31) such that, when the main receiving surface is arranged in the sunset position, the return solar module (6) is uncovered for receiving incident light and the actuator can be activated by the return solar module to rotate the main receiving surface into the sunrise position, and when the main receiving surface is in the sunrise position, the return solar module (6) is covered to block incident light, such that the actuator cannot be activated by the return solar module.

2. Solar tracker according to claim 1, wherein the return solar module is separate from the tracking solar module.

3. Solar tracker according to any of the preceding claims, wherein the return solar module (6) is provided stationary on the support frame (2).

4. Solar tracker according to any of the preceding claims, wherein, in the sunrise position, the main solar module (3) covers the return solar module (6) for incident light, and, in the sunset position, the main solar module is moved further away from the return solar module (6) such that the return solar module is uncovered.

5. Solar tracker according to any of the preceding claims, wherein the control arrangement comprises a first one (5) of the tracking solar module and a second one (5') of the tracking solar module arranged in opposite orientations with respect to each other and/or on opposite sides of the main solar module (3),
wherein the first tracking solar module (5) and the second tracking solar module (5') are oppositely electrically connected to the actuator to power the actuator in a first direction or in an opposite second direction, respectively,
wherein the return solar module is electrically connected in parallel with the second one of the tracking solar module.

6. Solar tracker according to any of the preceding claims, wherein the return solar module (6) and the tracking solar module (5) each have a rated electric power, e.g. rated peak voltage, that is substantially the same, e.g. wherein the rated electric power is smaller than a rated electric power, e.g. rated peak voltage, of the main solar module (3).

7. Solar tracker according to any of the preceding claims, further comprising at least one termination sensor (7) to detect arrangement of the main solar module in the sunrise position and/or in the sunset position, e.g. wherein the termination sensor is arranged on the support frame, wherein the termination sensor is electrically connected to the actuator to deactivate the actuator when the main solar module is arranged in the sunrise position and/or in the sunset position, respectively.

8. Solar tracker according to any of the preceding claims, wherein the actuator (4), return solar module (6) and/or the termination sensor (7) are electrically connected to each other in series, e.g. wherein the return solar module is electrically connected in parallel with the tracking solar module.

9. Solar tracker according to any of the preceding claims, wherein the return solar module (6) is positioned such that a lower edge (L1) thereof is substantially at the same height as a lower edge (L2) of the main solar module (3) in the sunrise position, such that, in the sunrise position, the return solar module is covered completely by the main solar module.

10. Solar tracker according to any of the preceding claims, wherein the support frame (2) comprises at least two legs (21, 21', 22, 22') to be supported on the ground surface, and a coupling shaft (23) that horizontally couples the at least two legs, wherein the main solar module (3) is mounted to the at least two legs via the shaft (23) for rotating about the rotation axis, and wherein the return solar module (6) is stationary mounted on one of the legs,
for example, wherein the shaft (23) is stationary, e.g. rigidly couplable to the support frame (2), wherein the main solar module is rotatably mounted to the shaft via one or more bearings (24), and wherein the actuator (4) is attached to the main solar module to rotate therewith around the rotation axis formed by the stationary shaft.

11. Solar tracker according to any of the preceding claims, wherein the main solar module, the tracking solar module and/or the return solar module are detachable from the support frame,
for example, wherein the main solar module, the tracking solar module and/or the return solar module, when detached from the support frame, can be arranged in a packed position in which the solar tracker can be carried as a single suitcase.

12. Solar tracker according to any of the preceding claims, wherein the actuator (4) comprises a worm gear transmission and an electric motor configured to rotate around the shaft (23) via the worm gear transmission.

13. Solar tracker according to any of the preceding claims, further comprising an alignment marking for aiding alignment of the solar tracker with respect to the sun, e.g. such that the return solar module (6) is aligned towards an expected sunrise direction, e.g. to the east;
and/or
further comprising a compass, gyroscope or GPS for aiding alignment of the solar tracker with respect to the sun, e.g. such that the return solar module (6) is aligned towards an expected sunrise direction, e.g. to the east.

14. Modular power generation device comprising:
- a power connector for power supply to an external device, e.g. an energy storage such as a battery, and/or a heating connector for attaching a heating system, e.g. an oven, furnace, building or water reservoir heater; and
- the solar tracker (1) according to any of the preceding claims, wherein the main solar module (3) is connected to the heating connector and/or electrically connected to the power connector.

15. Method for stand-alone heating and/or power supply using a solar tracker according to any of the claims 1-13 and/or a modular power generation device according to the preceding claim, comprising the steps of:
- supporting the support frame (2) on a ground surface;
- aligning the return solar module (6) towards an expected sunrise direction;
- supplying electric power with the tracking solar module (5) to rotate the main receiving surface (31) towards the sunset position for tracking the sun, thereby uncovering the return solar module (6); and
- supplying electric power with the return solar module (6) to rotate the main receiving surface (31) back towards the sunrise position,
for example, wherein the step of rotating the main receiving surface (31) into the sunrise position is performed while no electric power is supplied with the main solar module (3) nor with the tracking solar module (5).
